# EUROPEAN PATENT APPLICATION

(11) **EP 4 797 330 A1**
(43) Date of publication of application: **26.08.2026**
(21) Application number: 24878628.7
(22) Date of filing: 07.08.2024
(51) Int. Cl.: H01M 4/02

(54) **BIPOLAR BATTERY AND ELECTRIC APPARATUS**

(30) Priority: 20.10.2023 CN 202311368246
(71) Applicant: Contemporary Amperex Technology Co., Limited, Ningde, Fujian 352100 (CN)
(72) Inventor: WU, Kai, Ningde, Fujian 352100 (CN); CHEN, Jiahua, Ningde, Fujian 352100 (CN); OUYANG, Shaocong, Ningde, Fujian 352100 (CN)
(74) Representative: Lorenz Seidler Gossel Part. mbB
(86) International application number: PCT/CN2024/110281
(87) International publication number: WO 2025/081976

(57) **Abstract**

Provided in the present application are a bipolar battery and an electric apparatus. The bipolar battery comprises n stacked bipolar electrodes, where n > 1. Each of the bipolar electrodes comprises: a current collector, and a positive electrode film layer provided on one side of the current collector, wherein the side of the current collector on which the positive electrode film layer is provided is a positive side, and the side opposite to the positive side is a negative side; and the negative side is optionally provided with a negative electrode film layer or a conductive layer.

## Description

### CROSS-REFERENCE TO RELATED APPLICATIONS

The present application claims priority to Chinese Patent Application No. 202311368246.x, filed on October 20, 2023 and entitled "BIPOLAR BATTERY AND ELECTRICAL APPARATUS", the entire content of which is incorporated herein by reference.

### TECHNICAL FIELD

The present application relates to the technical field of batteries, and in particular, to a bipolar battery and an electrical apparatus.

### BACKGROUND

A typical secondary battery structure consists of a positive electrode, a negative electrode, an electrolyte solution, and a separator. The conversion of chemical energy into electrical energy is achieved through the exchange of ions and electrons between the positive and negative electrodes. In traditional electrode fabrication, the same active material is coated on both sides of the metal current collector to prepare a positive or negative electrode sheet. A separator is used to prevent them from contacting each other, and the components are assembled to form a single cell. Electric vehicles require high voltage to drive the electric motor. Because the voltage of a single cell is limited, it is necessary to connect a dozen or even a hundred cells in series to maintain a high operating voltage. Such high voltage and high current density output requires a large number of external control devices, which leads to a more complex battery pack structure and reduces the battery's specific energy and specific power.

### SUMMARY OF THE INVENTION

The present application provides a bipolar battery and an electrical apparatus, so as to simplify the battery structure.

A first aspect of the present application provides a bipolar battery comprising n stacked bipolar electrodes, where n > 1. Each of the bipolar electrodes comprises: a current collector, and a positive electrode film layer provided on one side of the current collector, wherein the side of the current collector on which the positive electrode film layer is provided is a positive side, and the side opposite to the positive side is a negative side; and the negative side is optionally provided with a negative electrode film layer or a conductive layer.

Compared with the conventional method of increasing the lower limit voltage by external series connection, bipolar batteries achieve high voltage by reducing the mechanical structural units required for series connection of multiple batteries. This not only simplifies the structure of the battery pack, but also improves the specific power and specific energy of a single battery pack. Especially for sodium-ion batteries, due to their wide voltage range and low lower limit voltage, they cannot be adapted to high-power devices and require a higher lower limit voltage. Adopting a bipolar structure unit is equivalent to connecting two or more batteries in series inside the battery, which is more conducive to achieving a higher lower limit voltage and broadening the application scenarios of sodium-ion batteries.

According to any embodiment of the first aspect of the present application, when the bipolar electrode has a negative electrode film layer, the CB value of the bipolar electrode is 1.05⁽ⁿ⁻¹⁾ to 1.1ⁿ, and the CB value = (A×T1×S1)/(C×T2×S2), where A is the areal density of the negative electrode film layer, T1 is the gram capacity of the negative electrode active material in the negative electrode film layer (i.e., the conventional charging gram capacity), S1 is the loading amount of the negative electrode active material in the negative electrode film layer, C is the areal density of the positive electrode film layer, T2 is the gram capacity of the positive electrode active material in the positive electrode film layer (i.e., the conventional charging gram capacity), and S2 is the loading amount of the positive electrode active material in the positive electrode film layer. This can reduce safety risks and improve cycle performance.

According to any embodiment of the first aspect of the present application, 1 < n ≤ 200.

According to any embodiment of the first aspect of the present application, the bipolar electrode has a negative electrode film layer, and the bipolar electrode further comprises: a first insulating layer provided on the negative side of the current collector, the first insulating layer extending from the negative electrode film layer toward the edge of the current collector; a second insulating layer provided on the positive side of the current collector, the second insulating layer extending from the positive electrode film layer toward the edge of the current collector; optionally, the thickness of the negative electrode film layer is a, the thickness of the positive electrode film layer is c, the thickness of the first insulating layer is d1, the thickness of the second insulating layer is d2, where a≤d1≤1.1a and/or c≤d2≤1.1c. The provision of the first insulating layer and the second insulating layer facilitates retaining as much electrolyte as possible within the active region during hot pressing.

According to any embodiment of the first aspect of the present application, the aforementioned bipolar electrode is a negative-electrode-free bipolar electrode. The bipolar electrode comprises a conductive layer provided on the negative side of the current collector, and the bipolar electrode further comprises: a first insulating layer provided on the negative side of the current collector, the first insulating layer extending from the conductive layer toward the edge of the current collector; a second insulating layer provided on the positive side of the current collector, the second insulating layer extending from the positive electrode film layer toward the edge of the current collector; optionally, the thickness of the positive electrode film layer is c, and the thickness of the conductive layer is less than c; optionally, the thickness of the first insulating layer is d1 and the thickness of the second insulating layer is d2, where c ≤ d1 ≤ 1.1c and/or c ≤ d2 ≤ 1.1c. The provision of the first insulating layer and the second insulating layer, on the one hand, facilitates retaining as much electrolyte as possible within the active region during hot pressing, and on the other hand, reserves space for volume changes of the positive electrode film layer, the conductive layer, and the deposited negative electrode active layer caused by intercalation and deintercalation of active ions, for example, alleviating the problem of degraded cycling performance and reliability of the battery due to insufficient space causing extrusion of active ions after deposition on the negative side.

According to any embodiment of the first aspect of the present application, the aforementioned bipolar electrode is a negative-electrode-free bipolar electrode, and a negative electrode sodium deposition region is provided on the negative side of the bipolar electrode. The bipolar electrode further comprises: a first insulating layer provided on the negative side of the current collector, the first insulating layer extending from the negative electrode sodium deposition region toward the edge of the current collector; a second insulating layer provided on the positive side of the current collector, the second insulating layer extending from the positive electrode film layer toward the edge of the current collector; wherein the thickness of the positive electrode film layer is c, the thickness of the first insulating layer is d1, and the thickness of the second insulating layer is d2, satisfying c ≤ d1 ≤ 2c and/or c ≤ d2 ≤ 2c. Sufficient space is reserved for volume changes of the bipolar electrode, while avoiding deformation of the bipolar electrode sheets and unnecessary reduction of battery energy density caused by an overlarge spacing between bipolar electrodes.

According to any embodiment of the first aspect of the present application, the electrolyte is a liquid electrolyte. Optionally, the bipolar battery further comprises a first insulating layer and a second insulating layer. The first insulating layer is provided on the negative side of the current collector, and the second insulating layer is provided on the positive side of the current collector. The projected area of the first insulating layer on the positive side is smaller than the area of the second insulating layer. Optionally, the extension direction from the positive electrode film layer toward the edge of the current collector is defined as the width direction of the first insulating layer and the second insulating layer. The projected width M1 of the first insulating layer on the positive side is smaller than the width M2 of the second insulating layer. Further optionally, M2-M1 is between 2mm and 10mm. This provides sufficient space for sodium deposition at the negative electrode, more precisely restricts the deposition location of active ions on the negative side, limits their deposition in the negative tab lead-out region, and more effectively improves the cyclic intercalation/deintercalation efficiency of active ions.

According to any embodiment of the first aspect of the present application, the electrolyte is an all-solid-state electrolyte or a gel electrolyte; optionally, the electrolyte is a gel polymer electrolyte; further optionally, the electrolyte includes any one or more of a polyethylene oxide gel electrolyte, a polyacrylonitrile gel electrolyte, a polymethyl methacrylate gel electrolyte, and a polyvinylidene fluoride gel electrolyte.

According to any embodiment of the first aspect of the present application, p1 is the compaction density of the negative electrode powder used for the negative electrode film layer under a pressure of 2t, and p2 is the compaction density of the positive electrode powder used for the positive electrode film layer under a pressure of 3t; pₘᵢₙ is the minimum value of P1 and P2, and pₘₐₓ is the maximum value of P1 and P2. The compaction density of the bipolar electrode is p, and p satisfies pₘᵢₙ≤p≤1.2pₘₐₓ.

According to any embodiment of the first aspect of the present application, the bipolar battery is a sodium-ion battery, and the current collector of the bipolar electrode comprises aluminum foil, stainless steel foil, a polymer material substrate coated with a metal layer on both sides, or copper foil; optionally, the positive electrode active material in the positive electrode film layer is sodium vanadium phosphate; optionally, in the bipolar electrode, the negative side of the current collector has no coating and is a rough surface, or the negative side of the current collector is provided with a conductive layer, or the negative side of the current collector is provided with a negative electrode film layer, and optionally the negative electrode active material in the negative electrode film layer is hard carbon; alternatively, the bipolar battery is a lithium-ion battery, and the current collector of the bipolar electrode comprises stainless steel foil, aluminum-copper composite foil, or polymer foil with aluminum or copper coated on both ends respectively.

A second aspect of the present application provides an electrical apparatus comprising a secondary battery, which is any one of the bipolar batteries provided in the first aspect.

### BRIEF DESCRIPTION OF THE DRAWINGS

In order to more clearly illustrate the technical solutions of the embodiments of the present application, the drawings required in the embodiments of the present application will be described briefly below. Apparently, the drawings described below depict merely some embodiments of the present application. For those of ordinary skill in the art, other drawings can also be obtained based on these drawings without any creative effort.
FIG. 1 is an exploded cross-sectional view of a bipolar battery provided in an embodiment of the present application.
FIG. 2 is an exploded cross-sectional view of a bipolar battery provided in another embodiment of the present application.
FIG. 3 is an exploded cross-sectional view of a bipolar battery provided in yet another embodiment of the present application.
FIG. 4 is a schematic side view of the bipolar electrode of the bipolar battery provided in FIG. 1.
FIG. 5 is a schematic view of a secondary battery according to an embodiment of the present application.
FIG. 6 is an exploded view of the secondary battery according to an embodiment of the present application as shown in FIG. 5.
FIG. 7 is a schematic view of a battery module according to an embodiment of the present application.
FIG. 8 is a schematic view of a battery pack according to an embodiment of the present application.
FIG. 9 is an exploded view of the battery pack according to an embodiment of the present application as shown in FIG. 8.
FIG. 10 is a schematic diagram of an electrical apparatus using a secondary battery according to an embodiment of the present application as a power source.

In the drawings, the drawings are not drawn to an actual scale.

### Description of reference numerals:

10 End positive electrode sheet; 20 Bipolar electrode; 21 Positive electrode film layer; 22 Negative electrode film layer; 23 Current collector; 24 Conductive layer; 25 First insulating layer; 26 Second insulating layer; 30 End negative electrode sheet; 40 Separator;
1 Battery pack; 2 Upper box; 3 Lower box; 4 Battery module; 5 Secondary battery cell; 51 Case; 52 Electrode assembly; 53 Top cover assembly.

### DETAILED DESCRIPTION

Embodiments of the present application are further described in detail below with reference to the accompanying drawings and embodiments. The following detailed description of the embodiments and the accompanying drawings are used to illustrate the principles of the present application by way of example, but should not be used to limit the scope of the present application, that is, the present application is not limited to the described embodiments.

Hereinafter, embodiments of the bipolar battery and electrical apparatus of the present application are described in detail and specifically disclosed with appropriate reference to the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit may be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

### [Bipolar battery]

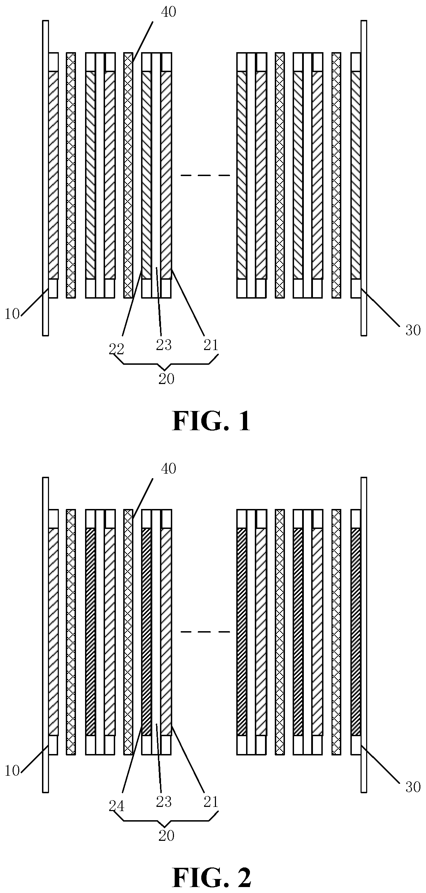

To simplify the battery structure, a first embodiment of the present application provides a bipolar battery. As shown in FIG. 1, the bipolar battery comprises n stacked bipolar electrodes 20, where n > 1. The bipolar electrode 20 comprises a current collector 23, a positive electrode film layer 21, and optionally a negative electrode film layer 22 or a conductive layer 24. The positive electrode film layer 21 is provided on one side of the current collector 23; the side of the current collector 23 provided with the positive electrode film layer 21 is defined as the positive side, and the side opposite to the positive side is defined as the negative side. The negative side of the current collector 23 is optionally provided with the negative electrode film layer 22 or the conductive layer 24.

Compared with the conventional manner of increasing the lower limit voltage by external series connection, the bipolar battery achieves a high voltage by reducing the mechanical structural units required for series connection of multiple batteries, which not only simplifies the battery structure but also improves the operating power and energy density of a single battery. Especially for sodium-ion batteries, due to their wide voltage range and low lower limit voltage, they cannot be adapted to high-power devices and require a higher lower limit voltage. Adopting a bipolar structure unit is equivalent to connecting two or more batteries in series inside the battery, which is more conducive to achieving a higher lower limit voltage.

In the above embodiment, the negative side of the bipolar electrode 20 may be arranged in various manners: no coating may be provided, only the conductive layer 24 may be provided, or the negative electrode film layer 22 may be provided. The bipolar electrodes 20 formed under the above three manners can be classified into two categories: one is the bipolar electrode 20 provided with the negative electrode film layer 22, referred to as a negative-electrode-containing bipolar electrode for short; the other is the bipolar electrode 20 not provided with the negative electrode film layer 22, referred to as a negative-electrode-free bipolar electrode for short. In the negative-electrode-free bipolar electrode, the positive electrode film layer 21 is coated on one side of the current collector 23, and no active material is provided on the other side. Compared with the existing negative-electrode-free sodium secondary batteries, this negative-electrode-free bipolar electrode also has the following advantages: conventional negative-electrode-free sodium secondary batteries use a thin current collector 23 or a thin conductive layer 24 coated on the surface of the current collector 23 as the negative electrode, which suffers from the disadvantage that the electrode sheet is thin and prone to wrinkling during winding production. In contrast, the combined thickness of the negative-electrode-free current collector 23 and the positive electrode in the negative-electrode-free bipolar electrode is increased, making it less prone to wrinkling. Meanwhile, the positive electrode and the negative electrode share the same current collector 23, saving half the volume of the current collector and enabling faster electron conduction.

To enable those skilled in the art to better understand the negative-electrode-free bipolar electrode, an negative-electrode-free sodium secondary battery is taken as an example for explanation below. An negative-electrode-free sodium secondary battery refers to a battery constructed without intentionally providing a negative electrode active material layer on the negative side during battery manufacturing (Note: This is mainly to avoid conflict with the subsequent provision of a small amount of negative electrode active material). For instance, a negative electrode active material layer is not formed by applying or depositing a sodium metal or carbonaceous active material layer at the negative electrode during battery manufacturing. During the first charge, sodium ions gain electrons on the negative side, and metallic sodium is deposited on the surface of the current collector to form a sodium metal phase. During discharge, the metallic sodium can be converted into sodium ions and return to the positive electrode, thus achieving cyclic charge and discharge. Compared with other sodium secondary batteries, negative-electrode-free sodium secondary batteries can achieve higher energy density since they have no negative electrode active material layer. Corresponding to the negative-electrode-free bipolar electrode of the above embodiments of the present application, it also refers to the absence of a negative electrode film layer containing a negative electrode active material on the negative side of the current collector. Sodium ions are deposited on the negative side surface of the current collector or on the conductive layer of the current collector during the first charge, and the deposited region serves as the negative electrode sodium deposition region. The projection of this region on the positive side overlaps with the positive electrode film layer 21 or covers the positive electrode film layer 21. During the deintercalation and intercalation of sodium ions of the negative-electrode-free bipolar battery, the problem of volume expansion and contraction of the negative electrode active material is avoided. In addition, the conductive layer 24 can enhance the transport kinetics of sodium ions, thereby improving the cycling performance of the bipolar battery.

In some embodiments, as shown in FIG. 1, the aforementioned bipolar battery comprises an electrolyte, an end positive electrode sheet 10, an end negative electrode sheet 30, and the above n stacked bipolar electrodes 20. A separator 40 is provided between adjacent stacked bipolar electrodes 20, and the bipolar electrodes 20 are provided between the end positive electrode sheet 10 and the end negative electrode sheet 30.

In a negative-electrode-containing bipolar electrode, the positive electrode film layer 21 is coated on one side of the current collector 23 and the negative electrode film layer 22 is coated on the other side. Losses occur during electron transfer when multiple bipolar electrodes 20 are stacked. This configuration aims to more effectively suppress sodium deposition or lithium deposition on the negative electrode, reduce the safety risks of the bipolar battery, and improve the cycling performance of the bipolar battery.

In some embodiments of the present application, when the bipolar electrode 20 has a negative electrode film layer 22, the CB value of the bipolar electrode 20 is 1.05⁽ⁿ⁻¹⁾ to 1.1ⁿ, and the CB value = (A×T1×S1)/(C×T2×S2), where A is the areal density of the negative electrode film layer 22, T1 is the gram capacity of the negative electrode active material in the negative electrode film layer 22, S1 is the loading amount of the negative electrode active material in the negative electrode film layer 22, C is the areal density of the positive electrode film layer 21, T2 is the gram capacity of the positive electrode active material in the positive electrode film layer 21, and S2 is the loading amount of the positive electrode active material in the positive electrode film layer 21.

The loading amount of the positive electrode active material in the positive electrode film layer refers to the mass content of the positive electrode active material in the positive electrode film layer; the loading amount of the negative electrode active material in the negative electrode film layer refers to the mass content of the negative electrode active material in the negative electrode film layer.

The CB value of the negative-electrode-containing bipolar electrode 20 is designed as described above, that is, the CB value is adaptively set according to the number of bipolar electrodes in the bipolar battery, so that the negative electrode capacity has an appropriate excess design relative to the positive electrode capacity. This ensures that the negative side has sufficient capacity to accommodate the intercalation of sodium ions/lithium ions deintercalated from the positive electrode, maximizes the utilization of the positive electrode capacity, and effectively reduces sodium dendrites/lithium dendrites formed during charging or cycling, thereby reducing safety risks and improving cycling performance.

The present application does not particularly limit the form of the bipolar battery; it can be either a stacked battery or a wound battery.

The bipolar battery of the present application does not have a special requirement for the number of bipolar electrodes 20. In some embodiments, 1 < n ≤ 200 so as to adapt to the voltage settings of different electrical devices. The number of bipolar electrodes 20 is adjusted within the above range according to the voltage setting requirements of different electrical devices, for example, adjusted to 5, 10, 20, 50, 100, 150 or 200.

In some embodiments, the n bipolar electrodes adopt the same design, i.e., each bipolar electrode adopts the same design for the positive electrode film layer and the negative electrode film layer.

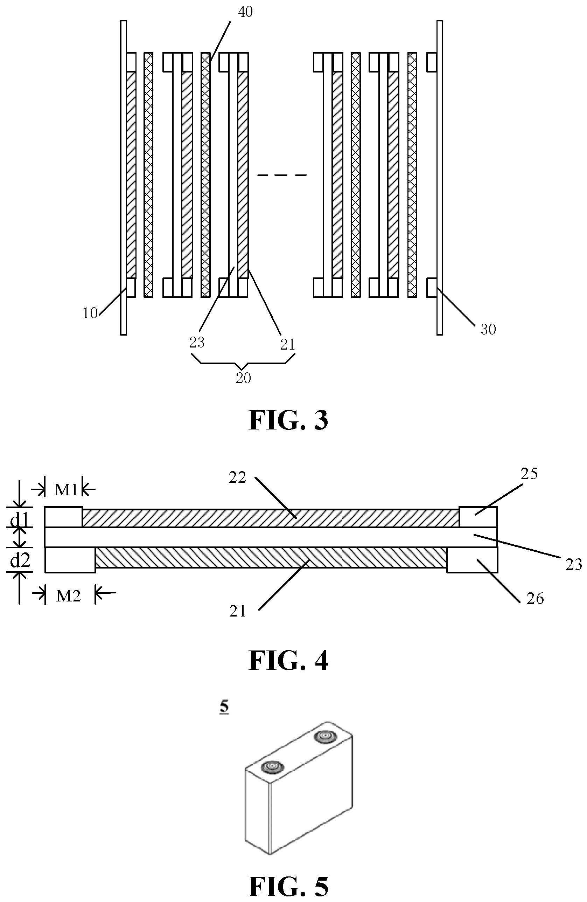

In some embodiments of the present application, as shown in FIG. 4, the bipolar electrode 20 comprises a negative electrode film layer 22, that is, the bipolar electrode 20 is the aforementioned negative-electrode-containing bipolar electrode 20. The bipolar electrode 20 further comprises a first insulating layer 25 and a second insulating layer 26. The first insulating layer 25 is provided on the negative side of the current collector 23, and the first insulating layer 25 extends from the negative electrode film layer 22 toward the edge of the current collector 23. The second insulating layer 26 is provided on the positive side of the current collector 23, and the second insulating layer 26 extends from the positive electrode film layer 21 toward the edge of the current collector 23. The provision of the first insulating layer 25 and the second insulating layer 26 facilitates retaining as much electrolyte as possible within the active region during hot pressing.

In some embodiments of the present application, optionally, the thickness of the negative electrode film layer 22 is a, the thickness of the positive electrode film layer 21 is c, the thickness of the first insulating layer 25 is d1, the thickness of the second insulating layer 26 is d2, where a≤d1≤1.1a and/or c≤d2≤1.1c. Sufficient space is reserved for volume changes of the bipolar electrode 20, while avoiding deformation of the bipolar electrode sheets and unnecessary reduction of battery energy density caused by an overlarge spacing between bipolar electrodes 20.

In some embodiments of the present application, with reference to FIG. 4 and with the negative electrode film layer 22 in FIG. 4 replaced by the following conductive layer 24, the bipolar electrode 20 is a negative-electrode-free bipolar electrode 20, and the bipolar electrode 20 comprises a current collector 23, a positive electrode film layer 21 provided on the positive side of the current collector 23, and a conductive layer 24 provided on the negative side of the current collector 23. The bipolar electrode 20 further comprises a first insulating layer 25 and a second insulating layer 26, wherein the first insulating layer 25 is provided on the negative side of the current collector 23 and the first insulating layer 25 extends from the conductive layer 24 toward the edge of the current collector 23; the second insulating layer 26 is provided on the positive side of the current collector 23 and the second insulating layer 26 extends from the positive electrode film layer 21 toward the edge of the current collector 23. The provision of the first insulating layer 25 and the second insulating layer 26, on the one hand, facilitates retaining as much electrolyte as possible within the active region during hot pressing, and on the other hand, reserves space for volume changes of the positive electrode film layer 21, the conductive layer 24, and the deposited negative electrode active layer caused by intercalation and deintercalation of active ions, for example, alleviating the problem of degraded cycling performance and reliability of the battery due to insufficient space causing extrusion of active ions after deposition on the negative side. Furthermore, the first insulating layer 25 provided in the negative-electrode-free bipolar electrode 20 can effectively reduce the deposition of active ions in regions other than the conductive layer 24 during charging, thereby enabling the deposited active ions to be released during discharge, achieving full cycling of active ions and improving the cycling performance of the battery.

Regarding the above-described embodiments with conductive layer 24, in some embodiments of the present application, optionally, the thickness of the positive electrode film layer 21 is c, and the thickness of the conductive layer 24 is less than c, so as to avoid the conductive layer 24 being too thick and causing a decrease in the energy density of the bipolar battery.

For the above embodiments provided with the conductive layer 24, in some embodiments of the present application, the thickness of the first insulating layer 25 is d1, the thickness of the second insulating layer 26 is d2, where c ≤ d1 ≤ 1.1c and/or c ≤ d2 ≤ 1.1c. Sufficient space is reserved for volume changes of the bipolar electrode 20, while avoiding deformation of the bipolar electrode sheets and unnecessary reduction of battery energy density caused by an overlarge spacing between bipolar electrodes 20.

In some embodiments of the present application, with reference to FIG. 4 and with the negative electrode film layer 22 in FIG. 4 removed, the bipolar electrode 20 is a negative-electrode-free bipolar electrode 20, and the bipolar electrode 20 comprises a current collector 23 and a positive electrode film layer 21 provided on the positive side of the current collector 23. A negative electrode sodium deposition region is provided on the negative side of the bipolar electrode 20. The bipolar electrode 20 further comprises a first insulating layer 25 and a second insulating layer 26, wherein the first insulating layer 25 is provided on the negative side of the current collector 23 and the first insulating layer 25 extends from the negative sodium deposition region toward the edge of the current collector 23; the second insulating layer 26 is provided on the positive side of the current collector 23 and the second insulating layer 26 extends from the positive electrode film layer 21 toward the edge of the current collector 23.

The provision of the first insulating layer 25 and the second insulating layer 26, on the one hand, facilitates retaining as much electrolyte as possible within the active region during hot pressing, and on the other hand, reserves space for volume changes of the positive electrode film layer 21 and the deposited negative electrode active layer caused by intercalation and deintercalation of active ions, for example, alleviating the problem of degraded cycling performance and reliability of the battery due to insufficient space causing extrusion of active ions after deposition on the negative side. Furthermore, providing the first insulating layer 25 in the negative-electrode-free bipolar electrode 20 can effectively reduce the deposition of active ions in regions other than the negative electrode sodium deposition region and suppress sodium dendrite formation during charging, thereby enabling the deposited active ions to be released during discharge, achieving full cycling of active ions and improving the cycling performance of the battery.

For the above embodiments of the negative-electrode-free bipolar electrode 20, in some embodiments of the present application, the thickness of the positive electrode film layer 21 is c, the thickness of the first insulating layer 25 is d1, the thickness of the second insulating layer 26 is d2, where c ≤ d1 ≤ 2c and/or c ≤ d2 ≤ 2c. Sufficient space is reserved for volume changes of the bipolar electrode 20, while avoiding deformation of the bipolar electrode sheets and unnecessary reduction of battery energy density caused by an overlarge spacing between bipolar electrodes 20.

The bipolar battery of the present application can be used in battery structure designs with tabs or in battery structure designs without tabs. In some embodiments of the present application, the bipolar battery further comprises tabs, with a positive electrode lead-out tab region provided on the positive side and a negative electrode lead-out tab region provided on the negative side. There are no special requirements for the location of the positive electrode lead-out tab region and the negative electrode lead-out tab region. Conventional designs can be referenced, for example, they may be arranged on the short side of the current collector. The arrangement of the tabs may also refer to the prior art, which will not be elaborated in the present application. Because the bipolar electrode of some embodiments of the present application is provided with a first insulating layer 25 and a second insulating layer 26, the provision of the first insulating layer 25 and the second insulating layer 26 effectively prevents the deposition of sodium ions in the lead-out tab region.

The main function of the first insulating layer 25 and the second insulating layer 26 is to provide insulation. Therefore, the insulating materials used for the battery cell in a secondary battery can be considered as the materials for the first insulating layer 25 and the second insulating layer 26. In some embodiments, the insulating materials of the first insulating layer 25 and the second insulating layer 26 include, but are not limited to, polyvinylidene fluoride, a composite of polyvinylidene fluoride and alumina, and polyimide. The first insulating coating and the second insulating layer 26 can be applied by coating, for example, coating the first insulating layer 25 and the second insulating layer 26 after coating the corresponding active material.

In some embodiments of the present application, the above-described negative-electrode-free bipolar electrode is more suitable for sodium-ion battery systems. The negative-electrode-containing bipolar electrode is suitable for both sodium-ion battery systems and lithium-ion battery systems.

In some embodiments of the present application, the bipolar battery is a sodium-ion battery, and the current collector of the bipolar electrode includes aluminum foil, stainless steel foil, a polymer material substrate coated with a metal layer on both sides, or copper foil. In some embodiments, the aforementioned polymer material substrates include but are not limited to substrates such as polypropylene (PP), polyethylene terephthalate (PET), polybutylene terephthalate (PBT), polystyrene (PS), and polyethylene (PE).

In some embodiments where the bipolar battery is a sodium-ion battery, the positive electrode active material in the positive electrode film layer may be selected from conventional positive electrode active materials used in sodium-ion batteries, such as at least one of sodium transition metal oxides, polyanionic compounds, and Prussian blue analogs. However, the present application is not limited to these materials, and other traditional well-known materials that can be used as positive electrode active materials for sodium-ion batteries may also be used.

As an optional technical solution of the present application, in the sodium transition metal oxide, the transition metal can be at least one of Mn, Fe, Ni, Co, Cr, Cu, Ti, Zn, V, Zr, and Ce. The sodium transition metal oxide is, for example, NaₓMO₂, where M is at least one of Ti, V, Mn, Co, Ni, Fe, Cr, and Cu, and 0 < x ≤ 1.

As an optional technical solution of the present application, the polyanionic compound can be a class of compounds having a sodium ion, a transition metal ion, and a tetrahedral (YO₄)ⁿ⁻ anionic unit. The transition metal can be at least one of Mn, Fe, Ni, Co, Cr, Cu, Ti, Zn, V, Zr, and Ce; Y can be at least one of P, S, and Si; and n represents the valence state of (YO₄)ⁿ⁻.

The polyanionic compounds can also be a class of compounds having a sodium ion, a transition metal ion, a tetrahedral (YO₄)ⁿ⁻ anionic unit, and a halogen anion. The transition metal can be at least one of Mn, Fe, Ni, Co, Cr, Cu, Ti, Zn, V, Zr, and Ce; Y can be at least one of P, S, and Si, n represents the valence state of (YO₄)ⁿ⁻; and the halogen can be at least one of F, Cl, and Br.

The polyanionic compound can also be a class of compounds having a sodium ion, a tetrahedral (YO₄)ⁿ⁻ anionic unit, a polyhedral unit (ZO_{y})^{m+}, and optionally a halogen anion. Y can be at least one of P, S, and Si; n represents the valence state of (YO₄)ⁿ⁻; Z represents a transition metal and can be at least one of Mn, Fe, Ni, Co, Cr, Cu, Ti, Zn, V, Zr, and Ce; m represents the valence state of (ZO_{y})^{m+}; and the halogen can be at least one of F, Cl, and Br.

The polyanionic compound is, for example, at least one of NaFePO₄, Na₃V₂(PO₄)₃ (sodium vanadyl phosphate, abbreviated as NVP), Na₄Fe₃(PO₄)₂(P₂O₇), NaM'PO₄F (M' is one or more of V, Fe, Mn, and Ni), and Na₃(VO_{y})₂(PO₄)₂F_{3-2y} (0 ≤ y ≤ 1).

The Prussian blue compound can be a class of compounds having a sodium ion, a transition metal ion, and a cyanide ion (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, where 0 < a ≤ 2, 0 < b < 1, and 0 < c < 1. In some embodiments, the positive electrode active material in the positive electrode film layer is optionally sodium vanadium phosphate.

The positive electrode film layer may optionally further comprise a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotubes, graphene, and carbon nanofibers.

When the bipolar battery is a sodium-ion battery, it can be either a negative-electrode-containing sodium-ion battery or a negative-electrode-free sodium-ion battery. The so-called negative-electrode-free sodium-ion battery refers to a structure in which the negative electrode employs a current collector with a rough surface on the negative side or a current collector provided with a conductive layer. In some embodiments of the present application, optionally, in the bipolar electrode, the negative side of the current collector is uncoated and has a rough surface, or is provided with a conductive layer. The roughness and formation method of the rough surface can be set with reference to conventional settings, and will not be elaborated further in the present application.

In some embodiments, the conductive layer comprises a conductive agent and a binder. Further optionally, the conductive agent includes any one or more of conductive carbon, conductive polymers, and conductive ceramic materials. the conductive carbon includes, but is not limited to, graphite, graphene, carbon fiber, carbon black, carbon dots, soft carbon, hard carbon, multi-walled carbon nanotubes, or single-walled carbon nanotubes.

In some embodiments, the conductive layer further optionally comprises a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments of the present application, the bipolar battery is a negative-electrode-containing sodium-ion battery, that is, in the bipolar electrode, the negative side of the current collector has a negative electrode film layer.

In some embodiments, a negative electrode active material for the battery well known in the art may be used as the negative electrode active material. As an example, the negative electrode active material may include at least one of the following materials: artificial graphite, natural graphite, soft carbon, hard carbon, a silicon-based material, and the like. The silicon-based material can include at least one of monatomic silicon, a silicon-oxygen compound, a silicon-carbon compound, a silicon-nitrogen compound and a silicon alloy. The tin-based material may be selected from at least one of elemental tin, tin-oxygen compound, and a tin alloy. However, the present application is not limited to these materials. Other traditional materials that can be used as negative electrode active materials for batteries may also be used. These negative electrode active materials may be used alone or in combination of two or more thereof. In some embodiments, considering that hard carbon exhibits a small volume expansion upon full charge, hard carbon is selected as the negative electrode active material in the negative electrode film layer.

In some embodiments, the negative electrode film layer further optionally comprises a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally comprise other adjuvants, for example, a thickener (e.g., sodium carboxymethylcellulose (CMC-Na)) and the like.

In some embodiments of the present application, the bipolar battery is a lithium-ion battery, and the current collector of the bipolar electrode includes stainless steel foil, aluminum-copper composite foil, or polymer foil with aluminum or copper plated at both ends respectively.

The positive electrode film layer of the bipolar electrode for a lithium-ion battery comprises a positive electrode active material. In some embodiments, the positive electrode active material may be those commonly known in the art for use in batteries. As an example, the positive electrode active material may comprise at least one of the following materials: a lithium-comprising phosphate of olivine structure, a lithium transition metal oxide, and a respective modified compound thereof. However, the present application is not limited to these materials, and other conventional materials that can be used as positive-electrode active materials for batteries may also be used. Only a single one of or a combination of two or more of these positive electrode active materials can be used. Examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may comprise, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotubes, graphene, and carbon nanofibers.

The negative electrode film layer of the bipolar electrode for a lithium-ion battery comprises a negative electrode active material, which may be negative electrode active materials commonly known in the art for use in batteries. As an example, the negative electrode active material can include at least one of the following materials: artificial graphite, natural graphite, soft carbon, hard carbon, a silicon-based material, a tin-based material, lithium titanate and the like. The silicon-based material can include at least one of monatomic silicon, a silicon-oxygen compound, a silicon-carbon compound, a silicon-nitrogen compound and a silicon alloy. The tin-based material may be selected from at least one of elemental tin, tin-oxygen compound, and a tin alloy. However, the present application is not limited to these materials. Other traditional materials that can be used as negative electrode active materials for batteries may also be used. These negative electrode active materials may be used alone or in a combination of two or more thereof.

In some embodiments, the negative electrode film layer further optionally comprises a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally comprise other adjuvants, for example, a thickener (e.g., sodium carboxymethylcellulose (CMC-Na)) and the like.

### [Electrolyte]

The electrolyte plays a role in conducting ions between the positive electrode sheet and negative electrode sheet. The type of the electrolyte is not specifically limited in the present application and can be selected according to requirements. For example, the electrolyte may be in a liquid state, a gel state or an all solid state.

In some embodiments of the present application, the electrolyte is a liquid electrolyte, and in this case, the bipolar battery is a liquid battery. Because the fluidity of the electrolyte solution in a liquid battery causes the lateral diffusion of active ions, making it difficult to control their position when deposited on the negative side, the bipolar electrode may optionally comprise a first insulating layer 25 and a second insulating layer 26. The specific arrangement of the first insulating layer 25 and the second insulating layer 26 can be referred to the aforementioned embodiments. The first insulating layer 25 and the second insulating layer 26 effectively control the deintercalation and intercalation active regions of active ions, thereby significantly improving the cycling performance of the bipolar battery.

Furthermore, in some embodiments of the liquid battery, the projected area of the first insulating layer 25 on the positive side is smaller than the area of the second insulating layer 26; optionally, the direction from the positive electrode film layer to the positive electrode lead-out tab region is defined as the width direction of the first insulating layer 25 and the second insulating layer 26. The projected width M1 of the first insulating layer 25 on the positive side is smaller than the width M2 of the second insulating layer 26. Further optionally, M2-M1 ranges from 2 mm to 10 mm. The above design provides sufficient space for sodium deposition at the negative electrode, more precisely restricts the deposition location of active ions on the negative side, limits their deposition in the negative tab lead-out region, and more effectively improves the cyclic intercalation/deintercalation efficiency of active ions.

The embodiments described above in the present application do not have any special requirements for the liquid electrolyte. Conventional liquid electrolytes used in lithium-ion batteries or sodium-ion batteries can be considered for use in the present application.

In some embodiments, the electrolyte is in a liquid state and further comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone, and ethylsulfonylethane.

In some embodiments, the electrolyte solution further optionally comprises an additive. As an example, the additive may include a negative electrode film-forming additive and a positive electrode film-forming additive and may further include additives that can improve some properties of the battery, for example, an additive that improves the overcharging performance of the battery and an additive that improves the high-temperature or low-temperature performance of the battery.

In some embodiments of the present application, the electrolyte is a solid-state electrolyte or a semi-solid-state electrolyte, that is, the bipolar battery is a solid-state battery. When it is a solid-state battery, the solid-state electrolyte or semi-solid-state electrolyte has low fluidity, so the lateral diffusion of active ions is limited, and the deposition position on the negative side is easier to control. In some embodiments, the first insulating layer 25 and the second insulating layer 26 may not be provided. Moreover, the solid-state electrolyte has high mechanical strength and can support the separator, thereby improving the mechanical stability of the battery.

In the case of the aforementioned solid-state battery, in some embodiments, the electrolyte is a gel polymer electrolyte. The gel polymer electrolyte possesses both certain flow buffering properties and considerable mechanical strength. Therefore, while achieving efficient ion conduction, it can prevent uncontrolled deposition caused by the lateral diffusion of active ions due to excessive flow, and its mechanical strength also provides effective support for the separator.

In some embodiments, the electrolyte includes any one or more of polyethylene oxide (PEO) gel electrolyte, polyacrylonitrile (PAN) gel electrolyte, polymethyl methacrylate (PMMA) gel electrolyte, and polyvinylidene fluoride (PVDF) gel electrolyte.

In some embodiments of the present application, the solid-state electrolytes mentioned above include, but are not limited to, polyethylene oxide (PEO)-based solid-state electrolytes, oxide-based sodium ion conductors, sulfur-based sodium ion conductors, and composite solid-state electrolytes formed by combining any two or more of the above.

In some embodiments of the present application, p1 represents the compaction density of the negative electrode powder used in the negative electrode film layer under a pressure of 2t; p2 represents the compaction density of the positive electrode powder used in the positive electrode film layer under a pressure of 3t; pmin is the minimum value of P1 and P2, and pmax is the maximum value of P1 and P2. The compaction density of the bipolar electrode is p, where p satisfies pmin ≤ p ≤ 1.2pmax. Through the above compaction density control, overpressure damage to the powders on both the positive and negative sides of the bipolar electrode sheet is effectively alleviated. The compaction density of each powder mentioned above is tested using an electronic pressure testing machine.

For the end positive electrode sheet and end negative electrode sheet, their compositions may refer to the positive-side composition and negative-side composition of the matching bipolar electrode. The end positive electrode sheet may be a single-sided electrode, or a double-sided electrode with film layers on both sides, similar to a conventional positive electrode sheet. Similarly, the end negative electrode sheet may be a current collector without a negative electrode, a current collector with a conductive layer, or a current collector with a negative electrode film layer, and may be a single-sided electrode or a double-sided electrode.

In some embodiments of the present application, the bipolar electrode can be prepared by the following method:
coating an insulating layer on a predetermined position of the current collector;
dispersing the above-mentioned components for preparing the positive electrode film layer in a solvent (e.g., N-methylpyrrolidone) to form a positive electrode slurry; coating the positive electrode slurry on one side of the current collector, followed by drying, cold pressing and other processes to obtain a current collector with a positive electrode film layer;
dispersing the above-mentioned components for preparing the negative electrode film layer or conductive layer in a solvent (e.g., N-methylpyrrolidone) to form a negative electrode slurry or conductive slurry; coating the negative electrode slurry or conductive slurry on one side of the current collector, followed by drying, cold pressing and other processes to obtain a current collector with a negative electrode film layer or conductive layer, thus completing the preparation of the bipolar electrode; of course, if the negative side is a rough surface, the above process for preparing the negative electrode film layer or conductive layer is not required.

### [Separator]

In some embodiments, the secondary battery further comprises a separator. The type of the separator is not particularly limited in the present application, and any well-known separator with a porous structure having good chemical stability and mechanical stability can be selected.

In some embodiments, the material of the separator may be selected from at least one of the group consisting of glass fibers, non-woven fabric, polyethylene, polypropylene, and polyvinylidene fluoride. The separator may be either a single-layer thin film or a multilayer composite thin film without special limitations. When the separator is a multi-layer composite film, the materials of each layer may be the same or different, with no particular limitation.

In some embodiments, the end positive electrode sheet, the bipolar electrode, the end negative electrode sheet, and the separator can be made into an electrode assembly through a winding process or a stacking process.

In some embodiments, the secondary battery may comprise an outer package. The outer package can be used for encapsulating the aforementioned electrode assembly and electrolyte.

In some embodiments, the outer package of the secondary battery may be a hard shell, such as a hard plastic shell, an aluminum shell, or a steel shell. The outer package of the secondary battery may also be a soft package, such as a pouch-type soft package. The material of the soft package may be plastic, and examples of the plastic may include polypropylene, polybutylene terephthalate, polybutylene succinate, and the like.

The shape of the secondary battery is not particularly limited in the present application, and the secondary battery may be cylindrical, prismatic, or in any other shape. For example, FIG. 5 shows a secondary battery cell 5 with a square structure as an example.

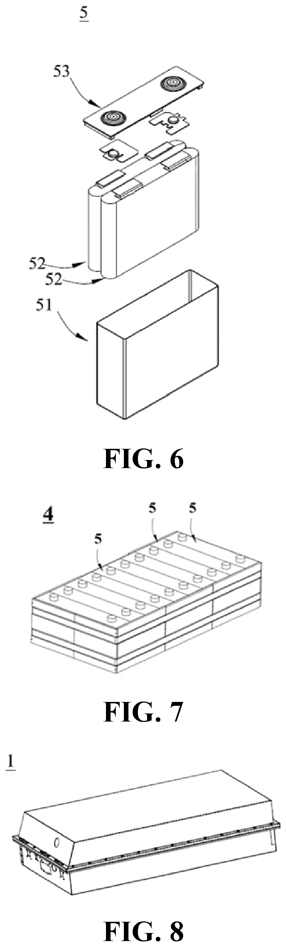

In some embodiments, referring to FIG. 6, the outer package can comprise a case 51 and a top cover assembly 53. The case 51 may comprise a bottom plate and a side plate connected to the bottom plate, which enclose to form an accommodating cavity. The case 51 has an opening in communication with the accommodating cavity, and the top cover assembly 53 can cover the opening to close the accommodating cavity. The end positive electrode sheet, bipolar electrode, and end negative electrode sheet may be formed into the electrode assembly 52 via a winding process or a stacking process. The electrode assembly 52 is encapsulated within the accommodating cavity. The electrode assembly 52 is impregnated with the electrolyte. One or more electrode assemblies 52 are in the secondary battery cell 5, and the number can be selected by those skilled in the art according to specific actual requirements.

In some embodiments, the secondary battery cells may be assembled into a battery module, the number of the secondary batteries included in the battery module may be one or more, and the specific number may be selected by those skilled in the art according to the application and capacity of the battery module.

FIG. 7 shows a battery module 4 as an example. Referring to FIG. 7, in the battery module 4, a plurality of secondary battery cells 5 may be sequentially provided in a length direction of the battery module 4. Of course, they can also be arranged in any other way. The plurality of secondary battery cells 5 may be further fixed by fasteners.

Optionally, the battery module 4 may further comprise a shell having an accommodating space, in which the plurality of secondary battery cells 5 are accommodated.

In some embodiments, the aforementioned battery module may further be assembled into a battery pack, the number of battery modules contained in the battery pack may be one or more, and the specific number can be selected by those skilled in the art according to the use and capacity of the battery pack.

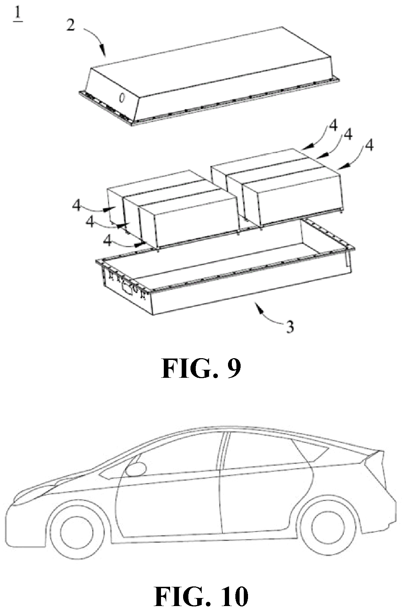

FIG. 8 and FIG. 9 show a battery pack 1 as an example. Referring to FIG. 8 and FIG. 9, the battery pack 1 may include a battery box and a plurality of battery modules 4 provided in the battery box. The battery box includes an upper box 2 and a lower box 3. The upper box 2 can cover the lower box 3 to form an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus can include, but is not limited to, a mobile apparatus (e.g., a mobile phone or a laptop), an electric vehicle (e.g., an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the secondary battery, the battery module, or the battery pack may be selected according to the use requirements thereof.

Fig. 10 is an electrical apparatus as an example. The electrical apparatus is an all-electric vehicle, a hybrid electric vehicle, a plug-in hybrid electric vehicle, etc. In order to meet the requirements of the electrical apparatus for high power and high energy density of a secondary battery, a battery pack or a battery module may be used.

### Examples

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. The reagents or instruments used without manufacturer indicated are all commercially available conventional products.

### Example 1

### Preparation process of bipolar electrodes

Aluminum foil was used as the current collector. A positive electrode film layer with a thickness of 150 µm was coated on one side, wherein the positive electrode film layer comprised positive electrode active material sodium iron pyrophosphate, conductive agent conductive carbon, and binder PDVF; the mass ratio of the three components was 95:2:3. A negative electrode film layer with a thickness of 200 µm was coated on the other side, wherein the negative electrode film layer comprised negative electrode active material hard carbon, conductive agent conductive carbon, and binder CMC; the mass ratio of the three components was 95:2:3. Polyvinylidene fluoride was used as the raw material for the insulating layer. A first insulating layer was arranged on the negative side, surrounding the negative electrode film layer, and the projected width M1 of the first insulating layer on the negative side onto the positive side was 4 mm. A second insulating layer was arranged on the positive side, surrounding the positive electrode film layer, and the width M2 of the second insulating layer on the positive side was 10 mm. The coating region width of the negative electrode film layer on the negative side was 100 mm, and the coating region width of the positive electrode film layer on the positive side was 88 mm.

Electrolyte solution: The electrolyte solution contained 0.5 mol/L NaPF₆, with a solvent of EC + DMC, the volume ratio of EC to DMC being 1:1.

Separator: A porous PE polymer film was used as the separator.

A coin cell was assembled in a coin cell assembly box using the above bipolar electrode, separator and electrolyte solution.

The thicknesses of the positive electrode film layer and the negative electrode film layer, as well as the widths and thicknesses of the first insulating layer and the second insulating layer, were measured with a micrometer;

A film layer of a specific area was weighed, and the areal density was calculated by dividing the mass of the film layer by the corresponding area.

The compaction densities of the positive electrode active material and the negative electrode active material were tested separately using an electronic pressure testing machine model UTM7305 under specified pressures. Specifically, the compaction density of the positive electrode active material was tested under a pressure of 3t, and that of the negative electrode active material under a compaction density of 2t.

Compaction density of the bipolar electrode sheet: The compaction density of the electrode sheet was obtained by dividing the calculated areal density by the thickness of the film layer.

Test of gram capacity T1 of the negative electrode active material in the negative electrode film layer:
The above negative electrode sheet, separator and sodium sheet were assembled into a coin cell to test the gram capacity of the negative electrode active material.

Within the rated charge-discharge voltage range (generally 0.005 V to 2.5 V), constant-current charging at 0.33 C rate was performed until the full-charge voltage (0.005 V) was reached, followed by constant-voltage charging at the full-charge voltage until the current reached 0.05 C. The charging capacity was obtained by integrating the charging current over the charging time, and then divided by the mass of the negative electrode active material in the coin cell (coating mass of the negative electrode * loading amount of the negative electrode active material) to obtain the gram capacity of the negative electrode active material.

Test of gram capacity T2 of the positive electrode active material in the positive electrode film layer:
The above positive electrode sheet, separator and sodium sheet were assembled into a coin cell to test the gram capacity of the positive electrode active material. Within the rated charge-discharge voltage range (the upper and lower limits vary depending on the specific positive electrode material), constant-current charging at 0.33 C rate was performed until the full-charge voltage was reached, followed by constant-voltage charging at the full-charge voltage until the current reached 0.05 C. The charging capacity was obtained by integrating the charging current over the charging time, and then divided by the mass of the positive electrode active material in the coin cell (coating mass of the positive electrode * loading amount of the positive electrode active material) to obtain the gram capacity of the positive electrode active material.

The test results are recorded in Table 1.

The compositions of the bipolar electrodes in Examples 2 to 13 and 16 to 17 were slightly adjusted relative to Example 1, as detailed in Table 1.

### Example 14

The bipolar electrode is the same as that in Example 1. The electrolyte is a polyethylene oxide gel electrolyte, wherein the molar ratio of PEO to Na ions is 15:1. PEO and sodium hexafluorophosphate were mixed and dissolved in tetrahydrofuran, dried to form an electrolyte membrane, laid flat on the surface of an electrode sheet for shaping, and then further dried.

### Example 15

Neither the first insulating layer nor the second insulating layer was provided in the bipolar electrode, and the rest is the same as that in Example 14.

### Examples 18 and 19

The compositions of the bipolar electrodes in Examples 18 and 19 were slightly adjusted relative to Example 15, as detailed in Table 1.

Cycling performance test: On a charge-discharge tester, constant-current charging was performed at a rate of 0.33C to a full-charge voltage, followed by constant-voltage charging (at the full-charge voltage) at a rate of 0.05C; the system was allowed to stand for 10 min and then constant-current discharging was conducted at a rate of 1C to a cut-off voltage. The above charge-discharge cycles were repeated until the capacity decays to 80%, and the number of cycles was recorded.

The test results are recorded in Table 1.

**Table 1**

| | Negative electrode film layer | | | | positive electrode film layer | | | |
|---|---|---|---|---|---|---|---|---|
| | a/mm | A/g/cm² | T1/ mAh/g | S1 | c/ mm | C/ g/cm² | T2/ mAh/g | S2 |
| Example 1 | 0.07 | 0.00616 | 300 | 95% | 0.05 | 0.012 | 140 | 95% |
| Example 2 | 0.0518 | 0.00477 | 300 | 95% | 0.03 | 0.008 | 140 | 95% |
| Example 3 | 0.06274 | 0.00596 | 300 | 95% | 0.02 | 0.006 | 140 | 95% |
| Example 4 | 0.0491 | 0.00442 | 300 | 95% | 0.03 | 0.008 | 140 | 95% |
| Example 5 | 0.05545 | 0.00532 | 300 | 95% | 0.03 | 0.008 | 140 | 95% |
| Example 6 | 0.0518 | 0.00477 | 300 | 95% | 0.03 | 0.008 | 140 | 95% |
| Example 7 | 0.0518 | 0.00477 | 300 | 95% | 0.03 | 0.008 | 140 | 95% |
| Example 8 | 0.0518 | 0.00477 | 300 | 95% | 0.03 | 0.008 | 140 | 95% |
| Example 9 | 0.0518 | 0.00477 | 300 | 95% | 0.03 | 0.008 | 140 | 95% |
| Example 10 | 0.0518 | 0.00477 | 300 | 95% | 0.03 | 0.008 | 140 | 95% |
| Example 11 | 0.0518 | 0.00477 | 300 | 95% | 0.03 | 0.008 | 140 | 95% |
| Example 12 | 0.0518 | 0.00477 | 300 | 95% | 0.03 | 0.008 | 140 | 95% |
| Example 13 | 0.0518 | 0.00477 | 300 | 95% | 0.03 | 0.008 | 140 | 95% |
| Example 14 | 0.0518 | 0.00477 | 300 | 95% | 0.03 | 0.008 | 140 | 95% |
| Example 15 | 0.0518 | 0.00477 | 300 | 95% | 0.03 | 0.008 | 140 | 95% |
| Example 16 | 0.04704 | 0.00409 | 300 | 95% | 0.03 | 0.008 | 140 | 95% |
| Example 17 | 0.06126 | 0.00613 | 300 | 95% | 0.03 | 0.008 | 140 | 95% |
| Example 18 | 0.04704 | 0.00409 | 300 | 95% | 0.03 | 0.008 | 140 | 95% |
| Example 19 | 0.06126 | 0.00613 | 300 | 95% | 0.03 | 0.008 | 140 | 95% |

| | CB Value | n | d1/ mm | d2/ mm | M1/ mm | M2/ mm | Compaction density/ g/cm³ | Cycling performance /cycles |
|---|---|---|---|---|---|---|---|---|
| | | | | | | | | |
| Example 1 | 1.07 | 2 | 0.0735 | 0.0525 | 4 | 10 | 1.5 | 1082 |
| Example 2 | 1.31 | 5 | 0.0544 | 0.0315 | 4 | 10 | 1.5 | 840 |
| Example 3 | 1.97 | 10 | 0.0659 | 0.021 | 4 | 10 | 1.5 | 709 |
| Example 4 | 1.22 | 5 | 0.0516 | 0.0315 | 4 | 10 | 1.5 | 812 |
| Example 5 | 1.46 | 5 | 0.0582 | 0.0315 | 4 | 10 | 1.5 | 791 |
| Example 6 | 1.31 | 5 | 0.0518 | 0.030 | 4 | 10 | 1.5 | 803 |
| Example 7 | 1.31 | 5 | 0.0570 | 0.033 | 4 | 10 | 1.5 | 882 |
| Example 8 | 1.31 | 5 | 0.0466 | 0.027 | 4 | 10 | 1.5 | 704 |
| Example 9 | 1.31 | 5 | 0.0575 | 0.033 | 4 | 10 | 1.5 | 737 |
| Example 10 | 1.31 | 5 | 0.0544 | 0.0315 | 8 | 10 | 1.5 | 814 |
| Example 11 | 1.31 | 5 | 0.0544 | 0.0315 | 2 | 12 | 1.5 | 883 |
| Example 12 | 1.31 | 5 | 0.0544 | 0.0315 | 10 | 10 | 1.5 | 734 |
| Example 13 | 1.31 | 5 | 0.0544 | 0.0315 | 1 | 13 | 1.5 | 762 |
| Example 14 | 1.31 | 5 | 0.0544 | 0.0315 | 10 | 10 | 1.5 | 848 |
| Example 15 | 1.31 | 5 | 0 | 0 | 0 | 0 | 1.5 | 794 |
| Example 16 | 1.13 | 5 | 0.0494 | 0.0321 | 4 | 10 | 1.5 | 412 |
| Example 17 | 1.69 | 5 | 0.0643 | 0.0321 | 4 | 10 | 1.5 | 678 |
| Example 18 | 1.13 | 5 | 0 | 0 | 0 | 0 | 1.5 | 611 |
| Example 19 | 1.69 | 5 | 0 | 0 | 0 | 0 | 1.5 | 735 |

According to the data from Examples 1, 4, 5, 16 and 17 in Table 1, the cycling performance of the battery can be adjusted by regulating the CB value. In particular, the cycle performance is significantly improved when the CB value is in the range of 1.05⁽ⁿ⁻¹⁾ to 1.1ⁿ.

It can be seen from the data comparison of Examples 6 to 9 in Table 1 that the thickness design of the first insulating layer and the second insulating layer also affects the cycling performance of the battery.

It can be seen from the data comparison of Examples 10 to 13 that the width design of the first insulating layer and the second insulating layer also affects the cycling performance of the battery.

### Example 20

### Preparation process of bipolar electrodes

Aluminum foil was used as a current collector, with a 150 µm-thick positive electrode film layer applied on one side. In the positive electrode film layer, the positive active material was sodium iron pyrophosphate, the conductive agent was conductive carbon, and the binder was PDVF; the mass ratio of the three components was 95:2:3, and the formed positive electrode film layer was identical to that in Example 1. The other side was a rough substrate coated with a conductive layer of carbon nanotubes with a thickness of 0.002 µm. Polyvinylidene fluoride was used as the raw material for the insulating layer. A first insulating layer 25 was arranged on the negative side, surrounding the conductive layer, and the projected width M1 of the first insulating layer on the negative side onto the positive side was 4 mm. A second insulating layer was arranged on the positive side, surrounding the positive electrode film layer, and the width M2 of the second insulating layer on the positive side was 10 mm. The coating region width of the conductive layer on the negative side was 100 mm, and the coating region width of the positive electrode film layer on the positive side was 88 mm.
Electrolyte solution: The electrolyte solution was 0.5 mol/L NaPF₆/(EC+DMC, volume ratio 1:1).
Separator: A porous PE polymer film was used as the separator.

A coin cell was assembled in a coin cell assembly box using the above bipolar electrode, separator and electrolyte solution.

Compaction density of bipolar electrode sheet: The film layer of a specific area was weighed, and the areal density was calculated by dividing the mass of the film layer by the area taken. The compaction density of the electrode sheet was obtained by dividing the calculated areal density by the thickness of the film layer.

The compositions of the bipolar electrodes in Examples 21 to 25 were slightly adjusted relative to Example 20, as detailed in Table 2.

The cycling performance test was performed in accordance with the method described above.

The test results are recorded in Table 2.

**Table 2**

| | n | d1/mm | d2/mm | M1/mm | M2/mm | Compaction density g/cm³ | Cycling performance/cycles |
|---|---|---|---|---|---|---|---|
| Example 20 | 5 | 0.003 | 0.105 | 4 | 4 | 3 | 809 |
| Example 21 | 5 | 0.003 | 0.105 | 4 | 10 | 3 | 1009 |
| Example 22 | 5 | 0.003 | 0.105 | 4 | 6 | 3 | 908 |
| Example 23 | 5 | 0.003 | 0.105 | 4 | 14 | 3 | 1107 |
| Example 24 | 5 | 0.003 | 0.105 | 10 | 10 | 3 | 808% |
| Example 25 | 5 | 0 | 0 | 0 | 0 | 3 | 765 |

It can be seen from the data comparison in Table 2 that the provision of the first insulating layer and the second insulating layer can significantly improve the cycling performance of the battery. Moreover, the improvement in cycling performance is particularly pronounced when the width of the first insulating layer is smaller than that of the first insulating layer. However, in Example 23, both the width of the first insulating layer and the width of the second insulating layer are relatively large, accompanied by a large difference therebetween. Although the cycling performance is significantly improved, the energy density of the battery is somewhat reduced due to the increased proportion occupied by the insulating layers.

### Example 26

Aluminum foil was used as the current collector, and a positive electrode film layer with a thickness of 150 µm was coated on one side. In the positive electrode film layer, the positive active material was sodium iron pyrophosphate, the conductive agent was conductive carbon, and the binder was PDVF; the mass ratio of the three components was 95:2:3, and the formed positive electrode film layer was the same as that in Example 1. The other side was a rough surface with a roughness of Ra=2.0Å and provided with a negative electrode sodium deposition region. Polyvinylidene fluoride was used as the raw material for the insulating layer. A first insulating layer was arranged on the negative side, surrounding the negative electrode sodium deposition region, and the projected width M1 of the first insulating layer on the negative side onto the positive side was 4 mm. A second insulating layer was arranged on the positive side, surrounding the positive electrode film layer, and the width M2 of the second insulating layer on the positive side was 10 mm. The width of the negative electrode sodium deposition region on the negative side was 100 mm, and the width of the positive electrode coating region on the positive side was 88 mm.

Electrolyte solution: The electrolyte solution contained 0.5 mol/L NaPF₆, with a solvent of EC + DMC, the volume ratio of EC to DMC being 1:1.

Separator: A porous PE polymer film was used as the separator.

A coin cell was assembled in a coin cell assembly box using the above bipolar electrode, separator and electrolyte solution.

Compaction density of bipolar electrode sheet: The film layer of a specific area was weighed, and the areal density was calculated by dividing the mass of the film layer by the area taken. The compaction density of the electrode sheet was obtained by dividing the calculated areal density by the thickness of the film layer.

The compositions of the bipolar electrodes in Examples 27 to 31 were slightly adjusted relative to Example 26, as detailed in Table 3.

The cycling performance test was performed according to the method described above.

The test results are recorded in Table 3.

**Table 3**

| | n | d1/mm | d2/mm | M1/mm | M2/mm | Compaction density/g/cm³ | Cycling performance/cycles |
|---|---|---|---|---|---|---|---|
| Example 26 | 5 | 0.105 | 0.105 | 4 | 4 | 3 | 704 |
| Example 27 | 5 | 0.105 | 0.105 | 4 | 10 | 3 | 806 |
| Example 28 | 5 | 0.105 | 0.105 | 4 | 6 | 3 | 705 |
| Example 29 | 5 | 0.105 | 0.105 | 4 | 14 | 3 | 1012 |
| Example 30 | 5 | 0.105 | 0.105 | 10 | 10 | 3 | 608 |
| Example 31 | 5 | 0 | 0 | 0 | 0 | 3 | 553 |

Upon comparison of the data in Table 2 and Table 3, it can be found that the cycling performance in Table 2 is better, while the trend in Table 2 is consistent with that in Table 3.

### Example 32

Nickel was first plated on one side of an Al current collector, followed by Cu plating to form a composite current collector. A positive electrode film layer with a thickness of 150 µm was coated on one side of the current collector, with an areal density of 0.200 mg/mm², a delithiated gram capacity of 150 mAh/g, and a positive electrode active material loading amount of 98%. The other side was coated with a negative electrode film layer with a thickness of 200 µm, in which the negative electrode active material was hard carbon, the conductive agent was conductive carbon, and the binder was CMC; the mass ratio of the three components was 95:2:3. Polyvinylidene fluoride was used as the raw material for the insulating layer. A first insulating layer was arranged on the negative side, surrounding the negative electrode film layer, and the projected width M1 of the first insulating layer on the negative side onto the positive side was 4 mm. A second insulating layer was arranged on the positive side, surrounding the positive electrode film layer, and the width M2 of the second insulating layer on the positive side was 10 mm. The coating region width of the negative electrode film layer on the negative side was 100 mm, and the coating region width of the positive electrode film layer on the positive side was 88 mm.

Electrolyte solution: The electrolyte solution contained 0.5 mol/L LiPF₆, with a solvent of EC + DMC, the volume ratio of EC to DMC being 1:1.

Separator: A porous PE polymer film was used as the separator.

A coin cell was assembled in a coin cell assembly box using the above bipolar electrode, separator and electrolyte solution.

The thickness of the positive electrode film layer, as well as the widths and thicknesses of the first insulating layer and the second insulating layer, were measured with a micrometer;

A film layer of a specific area was weighed, and the areal density was calculated by dividing the mass of the film layer by the corresponding area.

The compaction densities of the positive electrode active material and the negative electrode active material were tested separately using an electronic pressure testing machine model UTM7305 under specified pressures. Specifically, the compaction density of the positive electrode active material was tested under a pressure of 3t, and that of the negative electrode active material under a pressure of 2t.

Compaction density of the bipolar electrode sheet: The compaction density of the electrode sheet was obtained by dividing the calculated areal density by the thickness of the film layer.

Test of gram capacity T1 of the negative electrode active material in the negative electrode film layer:
A coin cell was assembled with the above negative electrode sheet, separator and lithium sheet to test the gram capacity of the negative electrode active material.

Within the rated charge-discharge voltage range (generally 0.005 V to 2.5 V), constant-current charging at 0.33 C rate was performed until the full-charge voltage (0.005 V) was reached, followed by constant-voltage charging at the full-charge voltage until the current reached 0.05 C. The charging capacity was obtained by integrating the charging current over the charging time, and then divided by the mass of the negative electrode active material in the coin cell (coating mass of the negative electrode * loading amount of the negative electrode active material) to obtain the gram capacity of the negative electrode active material.

Test of gram capacity T2 of the positive electrode active material in the positive electrode film layer:
A coin cell was assembled with the above positive electrode sheet, separator and lithium sheet to test the gram capacity of the positive electrode active material.

Within the rated charge-discharge voltage range (the upper and lower limits vary depending on the specific positive electrode material), constant-current charging at 0.33 C rate was performed until the full-charge voltage was reached, followed by constant-voltage charging at the full-charge voltage until the current reached 0.05 C. The charging capacity was obtained by integrating the charging current over the charging time, and then divided by the mass of the positive electrode active material in the coin cell (coating mass of the positive electrode * loading amount of the positive electrode active material) to obtain the gram capacity of the positive electrode active material.

The compositions of the bipolar electrodes in Examples 33 to 38 and Examples 41 and 42 were slightly adjusted relative to Example 32, as detailed in Table 4.

### Example 39

The bipolar electrode is the same as that in Example 32, and the parameters M1 and M2 of the insulating layer are shown in Table 4. The electrolyte is a polyethylene oxide gel electrolyte, wherein the molar ratio of PEO to Na ions is 15:1. PEO and sodium hexafluorophosphate were mixed and dissolved in tetrahydrofuran, dried to form an electrolyte membrane, laid flat on the surface of an electrode sheet for shaping, and then further dried.

### Example 40

Neither the first insulating layer nor the second insulating layer is provided in the bipolar electrode, and the rest is the same as that in Example 47.

### Examples 43 and 44

The compositions of the bipolar electrodes in Examples 43 and 44 were slightly adjusted relative to Example 39, as detailed in Table 4.

### Performance test:

The cycling performance was tested using the same method as described previously.

The test result is recorded in Table 4.

**Table 4**

| | Negative electrode film layer | | | | positive electrode film layer | | | |
|---|---|---|---|---|---|---|---|---|
| | a/mm | A/g/cm² | T1/ mAh/g | S1 | c/ mm | C/ g/cm² | T2/ mAh/g | S2 |
| Example 32 | 0.02918 | 0.00467 | 350 | 95% | 0.03 | 0.008 | 160 | 95% |
| Example 33 | 0.02706 | 0.00433 | 350 | 95% | 0.03 | 0.008 | 160 | 95% |
| Example 34 | 0.03067 | 0.00521 | 350 | 95% | 0.03 | 0.008 | 160 | 95% |
| Example 35 | 0.02918 | 0.00467 | 350 | 95% | 0.03 | 0.008 | 160 | 95% |
| Example 36 | 0.02918 | 0.00467 | 350 | 95% | 0.03 | 0.008 | 160 | 95% |
| Example 37 | 0.02918 | 0.00467 | 350 | 95% | 0.03 | 0.008 | 160 | 95% |
| Example 38 | 0.02918 | 0.00467 | 350 | 95% | 0.03 | 0.008 | 160 | 95% |
| Example 39 | 0.02918 | 0.00467 | 350 | 95% | 0.03 | 0.008 | 160 | 95% |
| Example 40 | 0.02918 | 0.00467 | 350 | 95% | 0.03 | 0.008 | 160 | 95% |
| Example 41 | 0.02505 | 0.00401 | 350 | 95% | 0.03 | 0.008 | 160 | 95% |
| Example 42 | 0.0353 | 0.006 | 350 | 95% | 0.03 | 0.008 | 160 | 95% |
| Example 43 | 0.02505 | 0.00401 | 350 | 95% | 0.03 | 0.008 | 160 | 95% |
| Example 44 | 0.0353 | 0.006 | 350 | 95% | 0.03 | 0.008 | 160 | 95% |

| | CB Value | n | d1/ mm | d2/ mm | M1/ mm | M2/ mm | Compaction density/ g/cm³ | Cycling performance/cycle s |
|---|---|---|---|---|---|---|---|---|
| | | | | | | | | |
| Example 32 | 1.31 | 5 | 0.0312206 | 0.0321 | 4 | 10 | 2.1 | 1011 |
| Example 33 | 1.22 | 5 | 0.028951 | 0.0321 | 4 | 10 | 2.1 | 869 |
| Example 34 | 1.46 | 5 | 0.0328207 | 0.0321 | 4 | 10 | 2.1 | 851 |
| Example 35 | 1.31 | 5 | 0.030637 | 0.0315 | 4 | 10 | 2.1 | 973 |
| Example 36 | 1.31 | 5 | 0.0320959 | 0.033 | 4 | 10 | 2.1 | 1052 |
| Example 37 | 1.31 | 5 | 0.0312206 | 0.0321 | 4 | 6 | 2.1 | 908 |
| Example 38 | 1.31 | 5 | 0.0312206 | 0.0321 | 4 | 14 | 2.1 | 981% |
| Example 39 | 1.31 | 5 | 0.0312206 | 0.0321 | 4 | 4 | 2.1 | 996 |
| Example 40 | 1.31 | 5 | 0 | 0 | 0 | 0 | 2.1 | 854 |
| Example 41 | 1.13 | 5 | 0.0268074 | 0.0321 | 4 | 10 | 2.1 | 882 |
| Example 42 | 1.69 | 5 | 0.0377739 | 0.0321 | 4 | 10 | 2.1 | 811 |
| Example 43 | 1.13 | 5 | 0 | 0 | 0 | 0 | 2.1 | 503 |
| Example 44 | 1.69 | 5 | 0 | 0 | 0 | 0 | 2.1 | 802 |

Although the present application is described with reference to the preferred embodiments, without departing from the scope of the present application, various improvements may be made to it and parts therein may be replaced with equivalents. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A bipolar battery, comprising n stacked bipolar electrodes, where n > 1, wherein the bipolar electrode comprises:
a current collector;
a positive electrode film layer provided on one side of the current collector, wherein the side of the current collector on which the positive electrode film layer is provided is a positive side, and the side opposite to the positive side is a negative side;
and the negative side is optionally provided with a negative electrode film layer or a conductive layer.

2. The bipolar battery according to claim 1, wherein when the bipolar electrode has the negative electrode film layer, the CB value of the bipolar electrode is 1.05⁽ⁿ⁻¹⁾ to 1.1ⁿ, $CB value = \left(A\times T1\times S1\right) / \left(C\times T2\times S2\right) ,$ wherein A is the areal density of the negative electrode film layer, T1 is the gram capacity of the negative electrode active material in the negative electrode film layer, S1 is the loading amount of the negative electrode active material in the negative electrode film layer, C is the areal density of the positive electrode film layer, T2 is the gram capacity of the positive electrode active material in the positive electrode film layer, and S2 is the loading amount of the positive electrode active material in the positive electrode film layer.

3. The bipolar battery according to claim 2, wherein 1<n ≤ 200.

4. The bipolar battery according to any one of claims 1 to 3, wherein the bipolar electrode is provided with the negative electrode film layer and the bipolar electrode further comprises:
a first insulating layer, provided on the negative side of the current collector, the first insulating layer extending from the negative electrode film layer toward the edge of the current collector; and
a second insulating layer, provided on the positive side of the current collector, the second insulating layer extending from the positive electrode film layer toward the edge of the current collector.

5. The bipolar battery according to claim 4, wherein
the thickness of the negative electrode film layer is a, the thickness of the positive electrode film layer is c, the thickness of the first insulating layer is d1, the thickness of the second insulating layer is d2, where a≤d1≤1.1a and/or c≤d2≤1.1c.

6. The bipolar battery according to claim 1, wherein the bipolar electrode is a negative-electrode-free bipolar electrode, the bipolar electrode comprises a conductive layer provided on the negative side of the current collector, and the bipolar electrode further comprises:
a first insulating layer, provided on the negative side of the current collector, the first insulating layer extending from the conductive layer toward the edge of the current collector; and
a second insulating layer, provided on the positive side of the current collector, the second insulating layer extending from the positive electrode film layer toward the edge of the current collector.

7. The bipolar battery according to any one of claims 1 to 6, wherein
the thickness of the positive electrode film layer is c, and the thickness of the conductive layer is less than c.

8. The bipolar battery according to claim 6, wherein
the thickness of the positive electrode film layer is c, the thickness of the first insulating layer is d1, the thickness of the second insulating layer is d2, where c≤d1≤1.1c and/or c≤d2≤1.1c.

9. The bipolar battery according to claim 1, wherein the bipolar electrode is a negative-electrode-free bipolar electrode, the negative side of the bipolar electrode is provided with a negative electrode sodium deposition region, and the bipolar electrode further comprises:
a first insulating layer, provided on the negative side of the current collector, the first insulating layer extending from the negative electrode sodium deposition region toward the edge of the current collector; and
a second insulating layer, provided on the positive side of the current collector, the second insulating layer extending from the positive electrode film layer toward the edge of the current collector;
the thickness of the positive electrode film layer is c, the thickness of the first insulating layer is d1, the thickness of the second insulating layer is d2, where c≤d1≤2c and/or c≤d2≤2c.

10. The bipolar battery according to any one of claims 1 to 9, wherein the electrolyte is a liquid electrolyte.

11. The bipolar battery according to claim 10, further comprising a first insulating layer and a second insulating layer, wherein the first insulating layer is provided on the negative side of the current collector, the second insulating layer is provided on the positive side of the current collector, and the projected area of the first insulating layer on the positive side is smaller than the area of the second insulating layer.

12. The bipolar battery according to claim 11, wherein the direction extending from the positive electrode film layer toward the edge of the current collector is defined as the width direction of the first insulating layer and the second insulating layer, and the projected width M1 of the first insulating layer on the positive side is smaller than the width M2 of the second insulating layer.

13. The bipolar battery according to claim 12, wherein M2-M1 is between 2 mm and 10 mm.

14. The bipolar battery according to any one of claims 1 to 9, wherein the electrolyte is an all-solid-state electrolyte or a gel electrolyte.

15. The bipolar battery according to claim 14, wherein the electrolyte is a gel polymer electrolyte.

16. The bipolar battery according to claim 15, wherein the electrolyte comprises any one or more of a polyethylene oxide gel electrolyte, a polyacrylonitrile gel electrolyte, a polymethyl methacrylate gel electrolyte, and a polyvinylidene fluoride gel electrolyte.

17. The bipolar battery according to any one of claims 1 to 16, wherein p1 represents the compaction density of the negative electrode powder used in the negative electrode film layer under a pressure of 2t; p2 represents the compaction density of the positive electrode powder used in the positive electrode film layer under a pressure of 3t; pₘᵢₙ is the minimum value of P1 and P2, pₘₐₓ is the maximum value of P1 and P2, the compaction density of the bipolar electrode is p, where p satisfies pₘᵢₙ≤p≤1.2pₘₐₓ.

18. The bipolar battery according to any one of claims 1 to 17, wherein the bipolar battery is a sodium-ion battery, and the current collector of the bipolar electrode includes aluminum foil, stainless steel foil, a polymer material substrate coated with a metal layer on both sides, or copper foil;
or
the bipolar battery is a lithium-ion battery, and the current collector of the bipolar electrode includes stainless steel foil, aluminum-copper composite foil, or polymer foil with aluminum or copper plated at both ends respectively.

19. The bipolar battery according to claim 18, wherein the sodium-ion battery has one or more of the following features:
1) the positive electrode active material in the positive electrode film layer is sodium vanadium phosphate;
2) in the bipolar electrode, the negative side of the current collector is uncoated and the negative side has a rough surface, or the negative side of the current collector is provided with the conductive layer, or the negative side of the current collector is provided with the negative electrode film layer;
3) when the negative side of the current collector is provided with the negative electrode film layer, the negative electrode active material in the negative electrode film layer is hard carbon.

20. An electrical apparatus, comprising a secondary battery, wherein the secondary battery is the bipolar battery according to any one of claims 1 to 19.
